# EUROPÄISCHE PATENTANMELDUNG

(11) **EP 1 850 603 A1**
(43) Veröffentlichungstag der Anmeldung: **31.10.2007**
(21) Anmeldenummer: 06112957.3
(22) Anmeldetag: 24.04.2006
(51) Int. Cl.: H04Q 7/22

(54) **Computersystem und Verfahren zur Geräteverwaltung der Geräte eines Mobilfunknetzes**

(71) Anmelder: Orga Systems GmbH, 33104 Paderborn (DE)
(72) Erfinder: Cznottka, Heinfried, 33175, Bad Lippspringe (DE)
(74) Vertreter: Richardt, Markus Albert

(57) **Zusammenfassung**

Computersystem zur Initiierung einer Übertragung von Daten (138) an Geräte (102) eines Mobilfunknetzes (100), wobei jedem Gerät eine eindeutige Gerätekennung und jedem Nutzer des Mobilfunknetzes eine eindeutige Nutzerkennung zugeordnet ist, wobei die Zuordnung von einem der Nutzer zu einem der Geräte veränderbar ist, mit
- Mitteln (116) zum Empfang der Gerätekennung eines der Geräte von dem Mobilfunknetz aufgrund einer Netzwerkanmeldung des einen der Geräte,
- Mitteln (118) zur Abfrage einer Datenbank (124), die aktuelle Zuordnungen der Gerätekennungen zu den Nutzerkennungen speichert, wobei die Abfrage mit der Gerätekennung des einen der Geräte erfolgt, um die der Gerätekennung aktuell zugeordnete Nutzerkennung zu ermitteln,
- Mitteln (120) zur Initiierung der Übertragung der Daten zu dem einen der Geräte anhand der Nutzerkennung.

## Beschreibung

Die Erfindung betrifft ein Computersystem und ein Verfahren zur Geräteverwaltung der Geräte eines Mobilfunknetzes sowie ein entsprechendes Computerprogrammprodukt.

Aus dem Stand der Technik sind verschiedene Mobilfunknetze, insbesondere zellulare, digitale Mobilfunknetze bekannt, wie zum Beispiel Mobilfunknetze, die nach dem GSM-, GPRS- und / oder UMTS-Standard arbeiten. Für solche Mobilfunknetze werden verschiedene Endgeräte angeboten, die sehr unterschiedliche Funktionsumfänge aufweisen können.

Aus der EP 1 331 833 A1 ist ein System zur Anpassung der über ein Mobilfunknetzwerk erbrachten Dienste an die Merkmale eines Endgerätes bekannt. Danach wird die Zuordnung einer Telefonnummer (MSISDN) zu der Gerätekennung (IMEI) des von dem Nutzer verwendeten Gerätes gespeichert. Mit Hilfe der IMEI als Schlüssel kann die dazugehörige MSISDN aufgefunden werden. In Abhängigkeit von den durch die IMEI identifizierten Geräteattributen des von dem Nutzer verwendeten Endgerätes, werden dann die über das Netzwerk erbrachten Dienste angepasst.

Der Erfindung liegt dem gegenüber die Aufgabe zu Grunde, ein Computersystem und ein Verfahren zur Geräteverwaltung der Geräte eines Mobilfunknetzes sowie ein entsprechendes Computerprogrammprodukt zu schaffen.

Die der Erfindung zu Grunde liegenden Aufgaben werden jeweils mit den Merkmalen der unabhängigen Patentansprüche gelöst. Bevorzugte Ausführungsformen der Erfindung sind in den abhängigen Ansprüchen angegeben.

Erfindungsgemäß wird ein Computersystem zur Initiierung einer Übertragung von Daten an Geräte eines Mobilfunknetzes geschaffen, wobei jedem Gerät eine eindeutige Gerätekennung und jedem Nutzer des Mobilfunknetzes eine eindeutige Nutzerkennung zugeordnet ist, wobei die Zuordnung von einem der Nutzer zu einem der Geräte veränderbar ist, mit Mitteln zum Empfang der Gerätekennung eines der Geräte von dem Mobilfunknetz aufgrund einer Netzwerkanmeldung des einen der Geräte, Mitteln zur Abfrage einer Datenbank, die aktuelle Zuordnungen der Gerätekennungen zu den Nutzerkennungen speichert, wobei die Abfrage mit der Gerätekennung des einen der Geräte erfolgt, um die der Gerätekennung aktuell zugeordnete Nutzerkennung zu ermitteln, und Mitteln zur Initiierung der Übertragung der Daten zu dem einen der Geräte anhand der Nutzerkennung.

Bei den Daten kann es sich beispielsweise um Geräteverwaltungsdaten, digitalen Content und/oder Daten zur Erbringung eines digitalen Dienstes handeln.

Unter "Geräteverwaltung" wird dabei erfindungsgemäß das sogenannte Device Management der Endgeräte des Mobilfunknetzes verstanden. Bei den Endgeräten kann es sich um Mobiltelefone, Smart Phones, Personal Digital Assistants und andere elektronische Geräte mit einer Mobilfunkschnittstelle handeln. Jedem der Geräte ist dabei eine eindeutige, das Gerät identifizierende Gerätekennung zugeordnet. Dem entsprechend kann es sich bei Geräteverwaltungsdaten um Konfigurationsdaten, insbesondere Gerätekonfigurationsdaten, und/oder ein ausführbares Programm handeln.

Im GSM-Standard handelt es sich bei der Gerätekennung um die sogenannte International Mobile Equipment Identity (IMEI). Die lMEl beinhaltet den Type Approval Code (TAC), den Final Assembly Code (FAC), die Seriennummer (SNR) und eine Prüfziffer (CD). Erfindungsgemäß wird eine solche Gerätekennung für ein effektives Device Management verwendet.

Jedem Nutzer ("Subscriber") des Mobilfunknetzes ist eine eindeutige Nutzerkennung zugeordnet. Hierbei kann es sich beispielsweise um die Telefonnummer des Nutzers handeln. In einem GSM Mobilfunknetz kann die MSISDN, das heißt die dem Nutzer zugeordnete Telefonnummer, und / oder die International Mobile Subscriber Identity (IMSI) als eindeutige Nutzerkennung verwendet werden.

Die Nutzerkennung ist typischerweise auf einer Chipkarte gespeichert, wie zum Beispiel auf einem sogenannten Subscriber Identity Module (SIM). Die Endgeräte des Mobilfunknetzes haben üblicherweise einen integrierten Chipkartenleser, in den die Chipkarte mit der gespeicherten Nutzerkennung eingeführt werden kann. Dadurch ist es möglich, dass ein Nutzer unterschiedliche Endgeräte wahlweise nutzt, indem er seine Chipkarte in den Kartenleser des jeweils gewünschten Endgeräts einführt.

Beispielsweise kann ein Nutzer im Büro, auf einer Geschäftsreise, am Wochenende oder im Urlaub jeweils unterschiedliche Endgeräte verwenden, die der jeweiligen Situation am besten angepasst sind. Ferner können die Nutzer des Mobilfunknetzes untereinander Endgeräte austauschen oder Endgeräte verkaufen, ohne dass dies zwingend eine Änderung der Vertragsbedingungen mit dem Betreiber des Mobilfunknetzes voraussetzt.

Andererseits ändern sich nicht nur nutzerseitig durch Wechsel der Endgeräte die jeweils zur Verfügung stehenden Funktionsumfänge, sondern auch seitens der Netzwerkbetreiber, die von Zeit zu Zeit neue und / oder differenzierte Dienste anbieten, die über das Mobilfunknetz erbracht werden können.

Die vorliegende Erfindung ist besonders vorteilhaft, da sie ein effizientes Device Management der Endgeräte ermöglicht, das diesen verschiedenen Aspekten Rechnung tragen kann.

Nach einer Ausführungsform der Erfindung wird eine Datenbank verwendet, in der die aktuellen Zuordnungen von Gerätekennungen zu Nutzerkennungen gespeichert sind. Wenn von dem Mobilfunknetz eine Signalisierungsinformation empfangen wird, wonach ein Gerät mit einer bestimmten Gerätekennung an dem Netzwerk angemeldet worden ist, so wird mit dieser Gerätekennung als Schlüssel die Datenbank abgefragt, um die der Gerätekennung aktuell zugeordneten Nutzerkennung zu ermitteln. Daraufhin erfolgt erforderlichenfalls die Initiierung der Übertragung von Geräteverwaltungsdaten zu dem betreffenden Gerät. Bei den Geräteverwaltungsdaten kann es sich um Konfigurationsdaten, beispielsweise zur Konfiguration eines Übertragungsprotokolls, wie zum Beispiel GPRS oder SyncML handeln.

Nach einer Ausführungsform der Erfindung erfolgt der Empfang der Gerätekennung durch Empfang eines Funktionsaufrufs, der von einer Netzwerkkomponente des Mobilfunknetzes an ein Geräteregister gerichtet wird, wenn das Gerät an dem Netzwerk angemeldet wird.

Bei dem Geräteregister kann es sich beispielsweise um ein sogenanntes Equipment Identity Register (EIR) handeln. In einem EIR ist eine weiße Liste mit den IMEIs der zugelassenen Endgeräte, eine schwarze Liste mit den IMEIs der gesperrten Geräte, die beispielsweise als gestohlen gemeldet sind, und eine graue Liste gespeichert.

Wenn ein Gerät am Netzwerk angemeldet wird, sendet die Netzkomponente, beispielsweise das betreffende Mobile Switching Center (MSC), den Funktionsaufruf "Check_IMEI" mit der IMEI des an dem Netzwerk anzumeldenden Gerätes an das EIR. Das EIR antwortet dann mit Statusinformation, die angibt, auf welcher der Listen des EIR die IMEI des betreffenden Gerätes vorkommt. Der Funktionsaufruf Check_IMEI wird gemäß einer Ausführungsform der vorliegenden Erfindung von dem Computersystem abgefangen ("intercepted"), um so die Information bezüglich der IMEI eines an dem Netzwerk anzumeldenden Gerätes zu erhalten.

Nach einer weiteren Ausführungsform der Erfindung ist das Geräteregister Teil des erfindungsgemäßen Computersystems.

Nach einer weiteren Ausführungsform der Erfindung sind die Mittel zur Initiierung der Übertragung zur Auslösung eines push service ausgebildet sind. Beispielsweise wird ein Auslösesignal generiert, dass die Gerätekennung und die Nutzerkennung beinhaltet. Dieses Auslösesignal wird zu einer externen Komponente Übertragen, beispielsweise zu einer Device Management Komponente, einer Content Management Komponente und/oder einer Customer Relationship Management Komponente. Die externe Komponente kann dann anhand der Gerätekennung eine Eigenschaft des betreffenden Gerätes ermitteln und zwar unmittelbar aus der Gerätekennung selbst und/oder durch Zugriff auf eine Datenbank, die den Gerätekennungen zugeordnete Eigenschaften speichert. Die zu übertragenden Daten werden dann in Abhängigkeit dieser Eigenschaft ausgewählt und/oder angepasst.

Beispielsweise werden Gerätekonfigurationsdaten in Abhängigkeit von dem anhand der Gerätekennung ermittelten Gerätetyp ausgewählt. Ferner kann das Format von digitalem Content an eine so ermittelte Geräteeigenschaft angepasst werden, beispielsweise an das Display des Geräts.

Besonders vorteilhaft ist dabei, dass die Übertragung dieser Daten synchron erfolgen kann, beispielsweise als synchroner push service. Die synchrone Übertragung der Daten ist dadurch gekennzeichnet, dass sie mit geringer Latenzzeit nach der Netzwerkanmeldung des Geräts erfolgt, da ja durch die Netzwerkanmeldung die Übertragung ausgelöst wird, insbesondere durch Empfang oder Auffangen eines Funktionsaufrufs an das Geräteregister.

Dadurch ist insbesondere sichergestellt, dass (i) das Endgerät zum Empfang der Daten bereit ist, wenn deren Übertragung initiiert wird, und (ii) die Daten praktisch sofort nach der Netzwerkanmeldung von dem Endgerät empfangen werden und dann dort beispielsweise zur Nutzung oder Konfiguration eines Dienstes oder Übertragungsprotokolls zur Verfügung stehen. Insbesondere wird dem Nutzer des Endgeräts so eine manuelle Konfiguration erspart.

Nach einer Ausführungsform der Erfindung hat die Datenbank den Gerätekennungen zugeordnete Markierungsfelder. Wenn ein Markierungsfeld einer bestimmten Gerätekennung markiert ist, und diese Gerätekennung aufgrund der Netzwerkanmeldung des betreffenden Geräts von dem Computersystem empfangen wird, so führt die entsprechende Datenbankabfrage dazu, dass die Übertragung der Geräteverwaltungsdaten initiiert wird.

Nach einer Ausführungsform der Erfindung werden die Markierungsfelder automatisch markiert. Beispielsweise wird ein Profil für die Geräte definiert, deren Markierungsfelder markiert werden sollen. In einem Anwendungsfall werden beispielsweise die Markierungsfelder, die zu Gerätekennungen von Geräten eines bestimmten Herstellers oder eines bestimmten Typs von Geräten eines bestimmten Herstellers gehören, automatisch markiert, so dass Geräteverwaltungsdaten zu diesen Geräten übertragen werden, wenn die betreffenden Geräte an dem Netzwerk angemeldet werden.

Nach einer Ausführungsform der Erfindung erfolgt die Übertragung der Geräteverwaltungsdaten in Abhängigkeit von der Abfrage einer Nutzerprofildatenbank. Mit der Nutzerkennung als Schlüssel, die aufgrund der Datenbankabfrage mit Hilfe der Gerätekennung als Schlüssel erhalten worden ist, wird eine Nutzerprofildatenbank abgefragt, um auf das entsprechende Nutzerprofil zuzugreifen. Beispielsweise kann in dem Nutzerprofil angegeben sein, dass ein bestimmter Dienst des Mobilfunknetzwerks von dem Nutzer aboniert worden ist. Daraufhin werden erforderlichenfalls Geräteverwaltungsdaten, das heißt beispielsweise Konfigurationsdaten, übermittelt, die zur Konfiguration des betreffenden Geräts für die Nutzung dieses Dienstes erforderlich sind.

In einem weiteren Aspekt betrifft die Erfindung ein Verfahren insbesondere zur Geräteverwaltung der Geräte eines Mobilfunknetzes mit folgenden Schritten: Empfang der Gerätekennung eines der Geräte von dem Mobilfunknetz aufgrund einer Netzwerkanmeldung des einen der Geräte, Abfrage einer Datenbank, die aktuelle Zuordnungen von Gerätekennungen zu Nutzerkennungen speichert, wobei die Abfrage mit der Gerätekennung des einen der Geräte erfolgt, um die der Gerätekennung aktuell zugeordnete Nutzerkennung zu ermitteln, Initiierung der Übertragung von Geräteverwaltungsdaten zu dem einen der Geräte anhand der Nutzerkennung.

In einem weiteren Aspekt betrifft die Erfindung ein entsprechendes Computerprogrammprodukt zur Durchführung eines erfindungsgemäßen Verfahrens.

Im weiteren werden Ausführungsformen der Erfindung mit Bezugnahme auf die Zeichnungen näher erläutert. Es zeigen:
- Figur 1: ein Blockdiagramm einer Ausführungsform eines erfindungsgemäßen Computersystems,
- Figur 2: ein Flussdiagramm einer Ausführungsform eines erfindungsgemäßen Verfahrens,
- Figur 3: ein Blockdiagramm einer weiteren Ausführungsform eines erfindungsgemäßen Computersystems,
- Figur 4: ein Sequenzdiagramm zur Generierung der Zuordnungsdatenbank der Figur 3,
- Figur 5: ein Sequenzdiagramm einer Ausführungsform eines erfindungsgemäßen Verfahrens,
- Figur 6: ein Sequenzdiagramm einer weiteren Ausführungsform eines erfindungsgemäßen Verfahrens für die Einführung eines neuen Dienstes,
- Figur 7: eine schematische Darstellung einer Ausführungsform der Zuordnungsdatenbank.

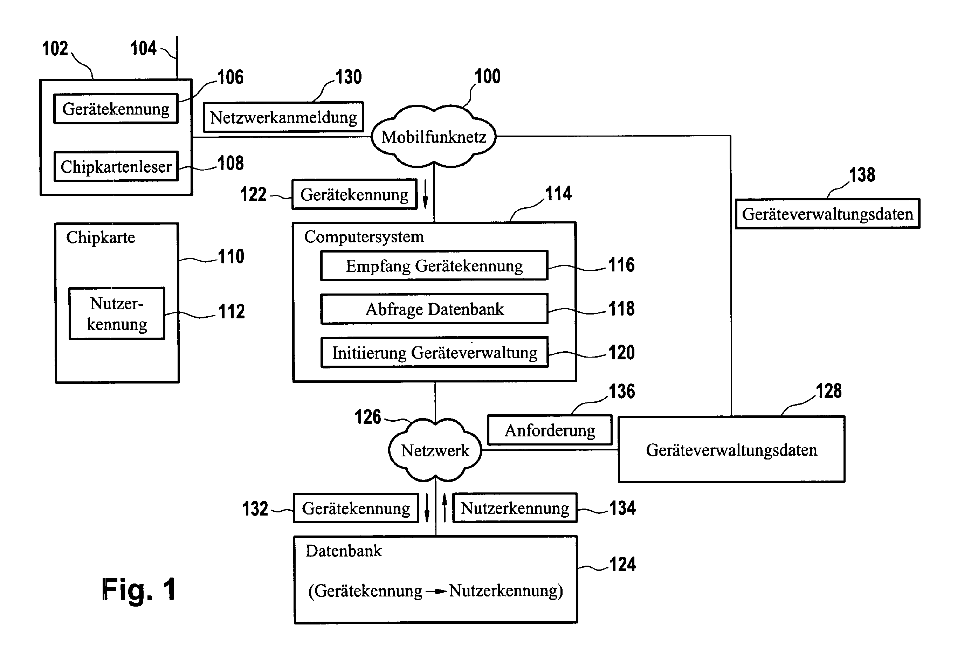

Die Figur 1 zeigt schematisch ein Mobilfunknetz 100 und exemplarisch eines der Endgeräte 102 des Mobilfunknetzes. Bei dem Endgerät 102 kann es sich um ein Mobiltelefon, ein Smart Phone, Personal Digital Assistent oder ein anderes elektronisches Gerät mit einer Mobilfunkschnittstelle 104 handeln. Dem Endgerät 102 ist eine Gerätekennung fest zugeordnet. Bei der Gerätekennung handelt es sich beispielsweise um die sogenannte IMEI. Die Gerätekennung ist in einem nicht-flüchtigen Speicher 106 des Endgeräts 102 unveränderbar abgespeichert.

Das Endgerät 102 hat einen integrierten Chipkarten-Leser 108 zur Aufnahme einer Chipkarte 110. Die Chipkarte 110 ist einem Nutzer des Mobilfunknetzes fest zugeordnet. Bei der Chipkarte 110 handelt es sich beispielsweise um eine sogenannte SIM-Karte. In einem nicht-flüchtigen Speicher 112 der Chipkarte 110 ist eine Nutzerkennung gespeichert, die dem betreffenden Nutzer fest zugeordnet ist. Bei dieser Nutzerkennung handelt es sich beispielsweise um die sogenannte MSISDN und/oder IMSI.

Ein Computersystem 114 ist mit dem Mobilfunknetz 100 gekoppelt. Das Computersystem 114 hat eine Komponente 116 zum Empfang eines Signals 122 von dem Mobilfunknetz 100, welches die Gerätekennung eines der Endgeräte beinhaltet, wenn dieses Endgerät an dem Mobilfunknetz 100 angemeldet wird.

Das Computersystem 114 hat ferner eine Komponente 118 zur Abfrage einer Datenbank 124 und eine Komponente 120 zur Initiierung der Übertragung von Daten, wie z.B. Geräteverwaltungsdaten.

Die Datenbank 124 kann Teil des Computersystems 114 sein oder, wie in der Figur 1 dargestellt, über ein Netzwerk 126 mit dem Computersystem 114 verbunden sein. Bei dem Netzwerk 126 kann es sich um ein Computernetzwerk, wie zum Beispiel ein Intranet oder das Internet handeln. In der Datenbank 124 sind die Gerätekennungen der Endgeräte des Mobilfunknetzes 110 und die den Gerätekennungen aktuell zugeordneten Nutzerkennungen gespeichert.

Eine weitere Komponente 128, die zum Beispiel durch einen Server-Computer realisiert sein kann, beinhaltet die Geräteverwaltungsdaten für das Device Management. Die Komponente 128 kann als integraler Bestandteil des Computersystems 114 realisiert sein oder sie kann, wie in der Figur 1 gezeigt, über das Netzwerk 126 oder ein anderes Kommunikationsmedium mit dem Computersystem 114 gekoppelt sein.

In dem hier betrachteten Anwendungsfall verwendet der Nutzer das Endgerät 102 mit seiner Chipkarte 110, so dass die Datenbank 124 einen entsprechenden Eintrag hat, der der Gerätekennung des Endgeräts 102 die auf der Chipkarte 110 gespeicherte Nutzerkennung zuordnet. Zur Erzeugung dieses Datenbankeintrags können die in dem Mobilfunknetz 100 vorhandenen Informationen auf geeignete Art und Weise verwendet werden. Ausführungsformen für geeignete Verfahren zur Generierung der Datenbank 124 werden weiter unten erläutert.

Zur Nutzung der Dienste des Mobilfunknetzes 100 muss das Endgerät 102 mit der in den Chipkarten-Leser 108 eingeführten Chipkarte 110 an dem Mobilfunknetz 100 angemeldet werden. Für die Netzwerkanmeldung werden Daten 130 zwischen dem Endgerät 102 und dem Mobilfunknetz 100 ausgetauscht; Teil dieser Daten 130 ist insbesondere die Gerätekennung des Endgeräts 102.

Diese Gerätekennung, die von dem Endgerät 102 im Rahmen der Netzwerkanmeldung an das Mobilfunknetz 100 übermittelt wird, empfängt auch das Computersystem 114 mit seiner Komponente 116 und zwar in Form des Signals 122. Daraufhin wird die Komponente 118 des Computersystems 114 aktiviert, die eine Datenbankabfrage 132 mit der Gerätekennung als Schlüssel an die Datenbank 124 richtet.

Als Ergebnis der Datenbankabfrage 132 erhält das Computersystem 114 von der Datenbank 124 eine Antwort 134, die die der Gerätekennung zugeordnete Nutzerkennung beinhaltet. Aufgrund des Empfangs der Antwort 134 wird die Komponente 120 des Computersystems 114 aktiviert.

Die Komponente 120 richtet eine Anforderung 136 an die Komponente 128, wobei die Anforderung die Nutzerkennung beinhaltet, die das Computersystem 114 mit der Antwort 134 erhalten hat. Vorzugsweise beinhaltet die Anforderung 136 auch die der Nutzerkennung zugeordnete Gerätekennung.

Aufgrund der Anforderung 136 überträgt die Komponente 128 geeignete Geräteverwaltungsdaten 138 über das Mobilfunknetz 100 an das Endgerät 102 unter Verwendung der Nutzerkennung. Beispielsweise sendet die Komponente 128 die Geräteverwaltungsdaten 138 per Short Message Service (SMS) an die Nutzerkennung, das heißt die MSISDN, oder unter Verwendung eines anderen geeigneten Fernkonfigurationsverfahrens. Solche Fernkonfigurationsverfahren werden auch als Overthe-Air (OTA) Verfahren bezeichnet.

Die Komponente 128 kann auch als integraler Bestandteil des Computersystems 114 ausgebildet sein, so dass die Versendung der Geräteverwaltungsdaten 128 von dem Computersystem 114 an das Endgerät 102 erfolgt. Ferner kann die Komponente 128 die Geräteverwaltungsdaten 138 zunächst an das Computersystem 114 liefern, welches diese Geräteverwaltungsdaten 138 dann in das Mobilfunknetz 100 zur Übertragung an das Endgerät 102 einspeist.

Die Auswahl der Geräteverwaltungsdaten 138 aus den durch die Komponente 128 zur Verfügung gestellten Geräteverwaltungsdaten erfolgt beispielsweise in Abhängigkeit des Typs des Endgeräts 102, welcher durch dessen Gerätekennung identifiziert wird, und / oder in Abhängigkeit eines Nutzerprofils, welches der Nutzerkennung zugeordnet sein kann. Diese Auswahl kann durch das Computersystem 114 oder durch die Komponente 128 erfolgen.

Besonders vorteilhaft ist, dass bereits während der Netzwerkanmeldung des Endgeräts 102 dessen Gerätekennung dem Computersystem 114 signalisiert werden kann, so dass das Computersystem 114 unmittelbar die Übertragung der Geräteverwaltungsdaten 138 initiieren kann. Durch den Zusammenhang zwischen der Netzwerkanmeldung und der Initiierung der Übertragung der Geräteverwaltungsdaten 138 ist insbesondere sichergestellt, dass das Endgerät 102 auch eingeschaltet und empfangsbereit ist, so dass es die Geräteverwaltungsdaten 138 auch tatsächlich empfangen kann.

Bei der Komponente 128 handelt es sich beispielsweise um eine Device Management Plattform, in der Geräteverwaltungsdaten, d.h. insbesondere Konfigurationsdaten, für verschiedene Gerätetypen bereitgestellt werden. Bei der Komponente 128 kann es sich aber auch um eine Content oder Customer Relationship Management Plattform handeln.

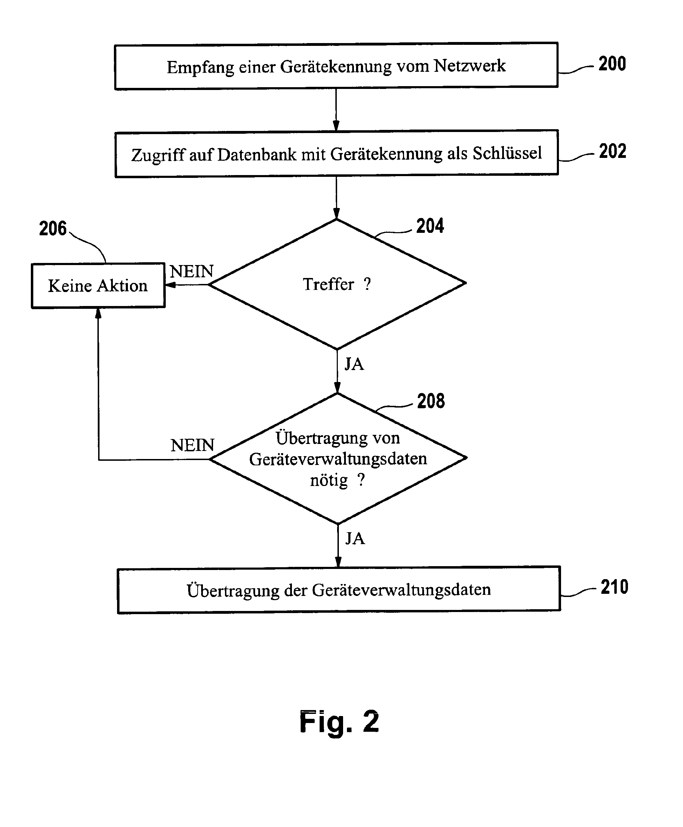

Die Figur 2 zeigt ein entsprechendes Flussdiagramm. In dem Schritt 200 erfolgt eine Netzwerkanmeldung eines Endgeräts an dem Mobilfunknetz, woraufhin das Mobilfunknetz dem Computersystem diese Netzwerkanmeldung durch Übertragung der Gerätekennung dieses Endgeräts signalisiert. Das Computersystem greift daraufhin in dem Schritt 202 auf die die Zuordnungen von Nutzerkennungen zu Gerätekennungen beinhaltende Datenbank zu und verwendet dabei die in dem Schritt 200 empfangene Gerätekennung als Schlüssel, um die dieser Gerätekennung zugeordneten Nutzerkennung zu ermitteln.

In dem Schritt 204 wird geprüft, ob die Antwort der Datenbank auf den Zugriff einen Treffer erhält. Falls dies nicht der Fall ist, ist die Gerätekennung in der Datenbank 124 nicht erfasst, weil das betreffende Gerät beispielsweise erstmalig benutzt wird, so dass es in der Datenbank 124 noch nicht erfasst worden ist. In diesem Fall erfolgt in dem nachfolgenden Schritt 206 keine weitere Aktion, das heißt, es werden keine Geräteverwaltungsdaten an das Endgerät übertragen. Es wird aber ein entsprechender neuer Eintrag in der Datenbank erzeugt.

Im gegenteiligen Fall wird in dem Schritt 208 geprüft, ob die Übertragung von Geräteverwaltungsdaten an die aufgrund des Zugriffs auf die Datenbank ermittelte Nutzerkennung erforderlich ist, weil beispielsweise schon die aktuellen Konfigurationsdaten zuvor übertragen worden sind. Wenn die Übertragung der Geräteverwaltungsdaten nicht erforderlich ist, werden in dem nachfolgenden Schritt 206 wiederum keine Geräteverwaltungsdaten übertragen. Im gegenteiligen Fall werden in dem Schritt 210 die Geräteverwaltungsdaten an die Nutzerkennung übertragen, wie zum Beispiel per SMS oder einem anderen OTA-Verfahren. Zur Durchführung des Schritts 208 wird zum Beispiel geprüft, ob für die Nutzung eines besonderen Dienstes, den der Nutzer abonniert hat, eine besondere Konfiguration des Endgeräts erforderlich ist. Die entsprechenden Konfigurationsdaten werden dann als Geräteverwaltungsdaten an das Endgerät übermittelt, um dieses dementsprechend zu konfigurieren.

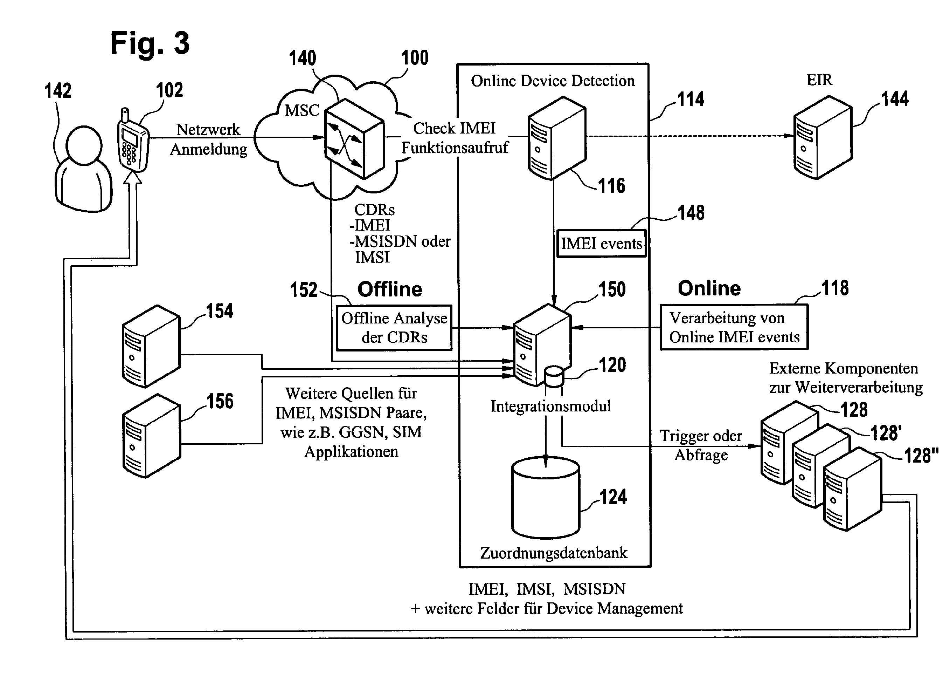

Die Figur 3 zeigt ein Blockdiagramm einer weiteren Ausführungsform eines erfindungsgemäßen Computersystems. Elemente der Figur 3, die Elementen der Figur 1 entsprechen, sind mit denselben Bezugszeichen gekennzeichnet.

Das Mobilfunknetz 100 beinhaltet sogenannte Mobile Switching Centers (MSCs) gegenüber denen eine Netzwerkanmeldung erfolgen kann. Die Figur 3 zeigt exemplarisch das MSC 140 des Mobilfunknetzes 100. In einem UMTS-Netzwerk werden die den MSCs entsprechenden Netzwerkkomponenten als Radio Network Controller (RNC) bezeichnet.

Ein Nutzer 142 kann sich mit seinem Endgerät 102 gegenüber dem MSC 140 an dem Mobilfunknetz 100 anmelden (vgl. Daten 130 der Figur 1).

Die MSCs des Mobilfunknetzes 100, insbesondere das MSC 140, können mit einem Geräteregister 144, das heißt einem sogenannten Equipment Identity Register (EIR) kommunizieren. In einem solchen Geräteregister sind im Allgemeinen eine weiße Liste ("white list"), eine schwarze Liste "(black list") und eine graue Liste ("grey list") gespeichert. Diese Listen beinhalten jeweils die Gerätekennungen von Endgeräten. Bei einem GSM-Netzwerk sind dies die International Mobile Equipment Identifiers (IMEIs) der Endgeräte, insbesondere des Endgeräts 102.

Wenn die IMEI eines Endgeräts auf der schwarzen Liste vermerkt ist, so bedeutet dies, dass das betreffende Endgerät gesperrt ist, beispielsweise, weil das Endgerät als gestohlen gemeldet worden ist. Die graue Liste kann die IMEIs von Endgeräten beinhalten, die von dem Netzwerkbetreiber gewählte Kriterien erfüllen; die weiße Liste beinhaltet die IMEIs der Endgeräte, die für den Gebrauch in dem Mobilfunknetz 100 zugelassen sind.

Im Rahmen der Netzwerkanmeldung, beispielsweise des Endgeräts 102, an dem Mobilfunknetz 100 überprüft das betreffende MSC, das heißt hier das MSC 140, ob des Endgerät 102 für den Gebrauch in dem Mobilfunknetz 100 zugelassen oder gesperrt ist. Hierzu generiert das MSC 140 im Rahmen der Netzwerkanmeldung einen Funktionsaufruf "Check_IMEI", den das MSC 140 an das EIR 144 richtet. Das EIR antwortet auf diesen Funktionsaufruf mit der entsprechenden Statusinformation, das heißt "black", "white" oder "grey", je nach dem, auf welcher der Listen des EIR 144 die lMEl des Endgeräts 102 gefunden worden ist. Mit dem Funktionsaufruf "Check_IMEI" wird also die IMEI des Endgeräts 102, das an dem Mobilfunknetz 100 angemeldet werden soll, von dem MSC 140 an das EIR 144 übertragen.

Das Computersystem 114 kann das EIR 144 als integralen Bestandteil beinhalten, oder - wie es in der Ausführungsform der Figur 3 gezeigt ist - die Komponente 116 zur Gerätedetektion ("Device Detection"). Die Komponente 116 dient zum Auffangen des Funktionsaufrufs Check_IMEI auf dem Übertragungsweg von dem MSC 140 an das EIR 144. Dadurch kann das Computersystem 114 die IMEI des Endgeräts 102 empfangen, wenn dieses an dem Mobilfunknetz angemeldet wird. Die Komponente 116 generiert daraufhin eine Nachricht 148 "IMEI Event", die die IMEI des Endgeräts 102 beinhaltet. Diese Nachricht 148 wird von der Komponente 116 in eine Komponente 150 des Computersystems 114 eingegeben.

Die Komponente 150 beinhaltet beispielsweise die Komponenten 118 und 120 für die Abfrage der Datenbank 124 bzw. die Initiierung der Übertragung von Geräteverwaltungsdaten. Ferner ist die Komponente 150 zur Generierung und Aktualisierung von Eintragungen in der Datenbank 124 ausgebildet. Hierzu ist die Komponente 150 mit dem Mobilfunknetz 100 verbunden, so dass die Komponente 150 Vergebührungsinformation von dem Mobilfunknetz 100, das heißt den MSCs des Mobilfunknetzes 100 empfangen kann. Solche Vergebührungsinformation beinhaltet sowohl die Gerätekennung als auch die Nutzerkennung hinsichtlich derer eine Telekommunikationsdienstleistung durch das Mobilfunknetz 100 erbracht worden ist, das heißt beispielsweise die IMEI des betreffenden Endgeräts 102 und die International Mobile Subscriber Identity (IMSI) und / oder die Telefonnummer, das heißt die MSISDN, die dem Nutzer 142 zugeordnet und auf dessen Chipkarte (vgl. Chipkarte 110 der Figur 1) gespeichert sind.

Die von dem MSCs des Mobilfunknetzes 100, insbesondere der MSC 140, generierten so genannten Call Detail Records (CDR) beinhalten diese Vergebührungsinformation und insbesondere die Gerätekennung / Nutzerkennung Paarungen, für die die Telekommunikationsleistungen erbracht worden sind.

Zum Aufbau der Datenbank 124 werden die von den MSCs des Mobilfunknetzes 100 generierten CDRs durch die Komponente 150 analysiert. Diese Analyse kann offline oder asynchron, das heißt mit einer gewissen zeitlichen Verzögerung von zum Beispiel einigen Minuten oder Stunden erfolgen. Hierzu hat die Komponente 150 eine Analysekomponente 152 zum Empfang der CDRs von den MSCs des Mobilfunknetzes 100 und für deren Analyse, das heißt zur Ermittlung der Gerätekennung / Nutzerkennung Paarungen, die in den CDRs vorkommen. Die so ermittelten Paarungen werden von der Komponente 150 in der Datenbank 124 gespeichert.

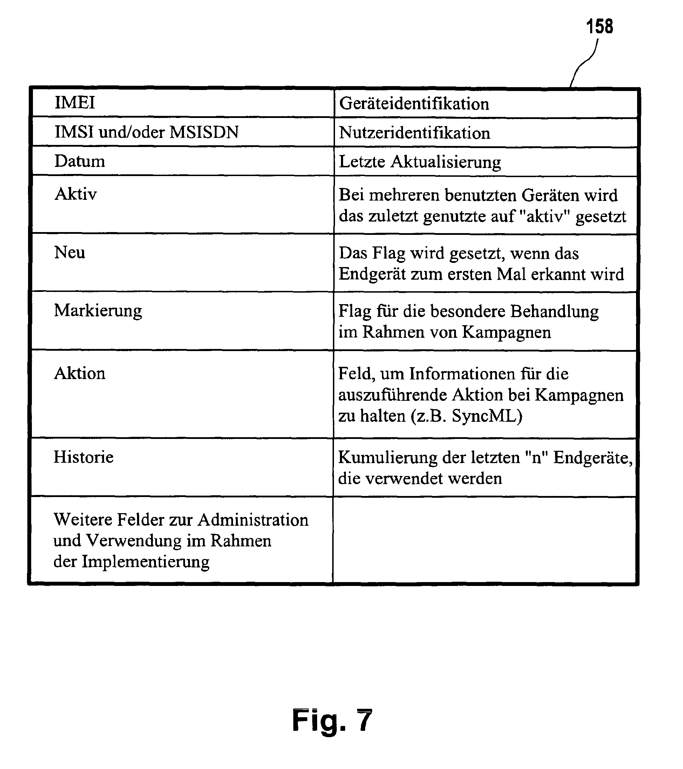

Ferner können ergänzende Felder für jeden Eintrag in der Datenbank 124 definiert sein, beispielsweise zur Realisierung verschiedener Funktionen des Device Managements, wie weiter unten anhand der Figur 7 noch exemplarisch näher erläutert.

Die Komponente 118 des Computersystems 114 ist zum Online-Empfang der Nachrichten 148 ausgebildet. Aufgrund des Empfangs der Nachricht 148, führt die Komponente 118 eine Abfrage der Datenbank 124 aus, um für die mit der Nachricht 148 empfangene IMEI die dazugehörige Nutzerkennung, das heißt die IMSI und / oder MSISDN zu ermitteln. Daraufhin initiiert die Komponente 120 die Übertragung von Geräteverwaltungsdaten, indem die Komponente 120 ein Auslösesignal ("Trigger") oder eine Abfrage mit der betreffenden Gerätekennung / Nutzerkennung Paarung an eine oder mehrere der Komponenten 128, 128', 128" richtet.

Bei den externen Komponenten 128, 128', 128" handelt es sich beispielsweise um eine Device Management Plattform, eine Content Management Plattform bzw. um eine Customer Relationship Managemtn Plattform. Diese Plattformen sind jeweils mit dem Mobilfunknetz 100 verbunden, d.h. es handelt sich hierbei um Netzwerkkomponenten.

Die Device Management Plattform 128 beinhalten Geräteverwaltungsdaten für verschiedene Endgeräte, beispielsweise jeweils für verschiedene Typen von Endgeräten. Durch den Trigger oder die Abfrage wird die IMEI von der Komponente 150 empfangen, welche insbesondere den Gerätetyp identifiziert. Daraufhin werden mit der Typinformation als Schlüssel typspezifische Geräteverwaltungsdaten, beispielsweise von der Komponente 128 zur Verfügung gestellt, und beispielsweise über das Mobilfunknetz 100 an das Endgerät 102 des Nutzers 142 übertragen, und zwar indem eine entsprechende Nachricht an die Nutzerkennung des Nutzers 142 gerichtet wird.

Die Auswahl von Geräteverwaltungsdaten muss dabei keineswegs typspezifisch erfolgen, sondern kann auch nach anderen Kriterien erfolgen, zum Beispiel nach nutzerspezifischen Kriterien, indem beispielsweise ein Benutzerprofil des Nutzers 142 ausgewertet wird, oder durch eine Kombination verschiedener Kriterien, wie weiter unten noch exemplarisch erläutert.

Das Integrationsmodul 150 kann zur Erzeugung der Datenbank 124 alternativ oder zusätzlich mit anderen Datenquellen 154, 156 verbunden sein, die Gerätekennung / Nutzerkennungen Paarungen liefern. Hierbei kann es sich zum Beispiel um GGSM, SIM oder andere Applikationen oder Dienste des Mobilfunknetzes 100 handeln, da auch in solchen Applikationen und Diensten die Gerätekennung / Nutzerkennung Paarungen vorliegen müssen, hinsichtlich derer der jeweilige Dienst erbracht wird.

Für die Geräteverwaltung der Endgeräte des Mobilfunknetzes 100 mit Hilfe des Computersystems 114 muss also zunächst die Datenbank 124 zur Verfügung gestellt oder aufgebaut werden. Dies kann durch die Komponente 150 des Computersystems 114 erfolgen, und zwar durch Auswertung der von den MSCs gelieferten CDRs und / oder der von den Datenquellen 154 und 156 gelieferten Gerätekennung / Nutzerkennung Paarungen.

Wenn während des Betriebs des Computersystems 114 die Nachricht von der Komponente 118 empfangen wird, so wird mit Hilfe der Datenbank 124 die der IMEI zugeordnete Nutzerkennung ermittelt. Daraufhin werden die externen Komponenten 128, 128' und / oder 128" abgefragt oder getriggert, um z.B. Geräte und / oder Nutzer und / oder anwendungsspezifisch Geräteverwaltungsdaten an das Endgerät des betreffenden Nutzers zu übertragen.

Das Computersystem 114 ist besonders vorteilhaft, da es sich die in dem Mobilfunknetz 100 ohnehin zur Verfügung stehenden Funktionalitäten und Informationen auf effiziente Art und Weise für das Device Management zu Nutze macht. Vorteilhaft ist insbesondere die Nutzung der MSCs als Informationsquelle und zwar sowohl zur Generierung der Datenbank 124 durch Auswertung der CDRs als auch für die Online-Auslösung der Übertragung von Geräteverwaltungsdaten an das Endgerät durch Auffangen oder Empfangen des Check_IMEI Funktionsaufrufs.

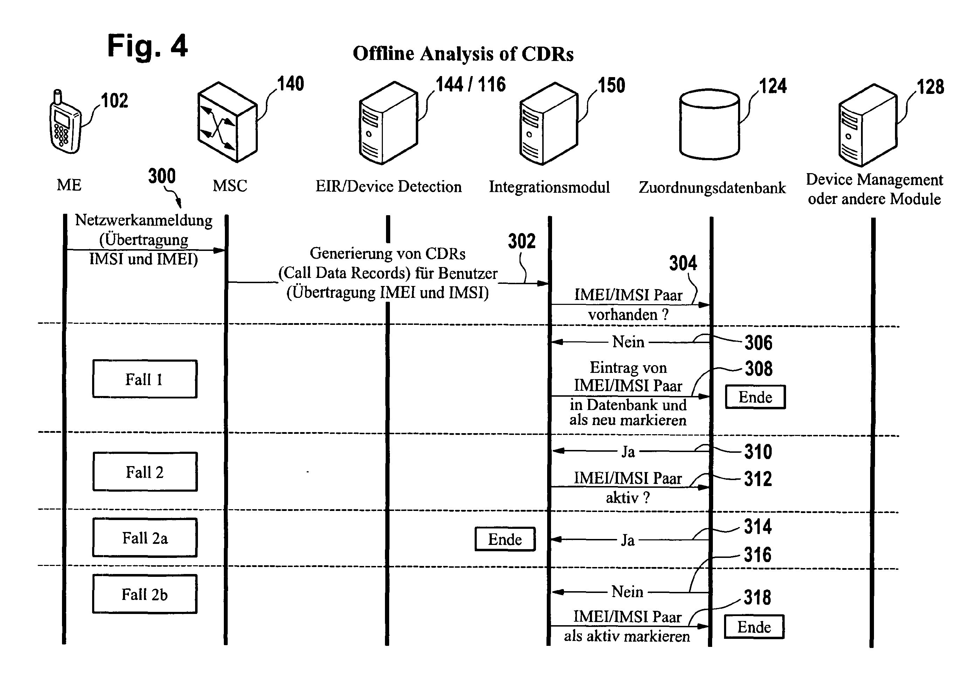

Die Figur 4 zeigt ein Sequenzdiagramm betreffend die Offline-Analyse der CDRs zur Erzeugung der Datenbank 124. Das Sequenzdiagramm betrifft dabei exemplarisch die in der Figur 3 gezeigten Komponenten Endgerät 102, MSC 140, je nach Ausführungsform EIR 144 oder Komponente 116, Komponente 150, Datenbank 124 und ein oder mehrere externe Komponenten 128.

In dem Schritt 300 erfolgt die Netzwerkanmeldung des Endgeräts 102 gegenüber dem MSC 140. Dabei wird die IMSI des aktuellen Nutzers des Geräts 102 und die IMEI des Geräts 102 an das MSC 140 übertragen. Aufgrund der Inanspruchnahme von Diensten des Mobilfunknetzes 100, beispielsweise Sprach- und / oder Datendiensten, werden durch das MSC 140 CDRs generiert, die diese IMEI- / IMSI-Paarung beinhalten. Diese CDRs werden in das Integrationsmodul 150 eingegeben (Schritt 302), und von dessen Komponente 152 (vgl. Figur 3) analysiert. Zunächst wird in dem Schritt 304 durch einen Zugriff auf die Datenbank 124 geprüft, ob dieses IMEI- / IMSI-Paar in der Datenbank 124 bereits gespeichert ist.

In dem Fall 1 ist diese IMEI- / IMSI-Paarung in der Datenbank 124 noch nicht vorhanden, was die Datenbank 124 dem Integrationsmodul in dem Schritt 306 signalisiert. Daraufhin wird das so ermittelte neue IMEI- / IMSI-Paar von dem Integrationsmodul 150 in der Datenbank 124 gespeichert und als neu markiert (Schritt 308).

In dem gegenteiligen Fall 2 ist dagegen das betrachtete IMEI- / IMSI-Paar bereits in der Datenbank 124 vorhanden, was die Datenbank 124, dem Integrationsmodul 150 in dem Schritt 310 signalisiert. Das Integrationsmodul 150 fragt daraufhin die Datenbank 124 dahingehend ab, ob dieses IMEI- / IMSI-Paar als aktiv in der Datenbank 124 markiert ist (Schritt 312).

Wenn dies der Fall ist (Fall 2a), signalisiert dies die Datenbank 124 dem Integrationsmodul 150 in dem Schritt 314. Wenn das Gegenteil der Fall ist (Fall 2b), signalisiert dies die Datenbank 124 dem Integrationsmodul 150 in dem Schritt 316, so dass das Integrationsmodul 150 daraufhin den Eintrag in der Datenbank 124 als aktiv markiert (Schritt 318), da diese Paarung jetzt aufgrund eines Gerätetauschs aktiv geworden ist.

In dem Fall 2 ist also die betrachtete IMEI- / IMSI-Paarung bereits früher einmal vorgekommen, das heißt der Benutzer 142 hat bereits schon einmal das Endgerät 102 für die Anspruchnahme von Dienstleistungen des Mobilfunknetzes 100 benutzt. Ist der betreffende Eintrag für diese IMEI- / IMSI-Paarung in der Datenbank 124 als "aktiv" markiert, dann hat es seit der letzten Netzwerkanmeldung keinen Endgerätetausch gegeben (Fall 2a). Ist jedoch das gefundene IMEI- / IMSI-Paar als nicht aktiv markiert, dann war zuvor ein anderes Paar "aktiv" und ein Endgerätetausch hat stattgefunden. Dementsprechend wird der so aufgefundene Eintrag der Datenbank 124 als "aktiv" markiert. Ferner kann eine Datenbankabfrage der Datenbank 124 durchgeführt werden, um das zuvor aktivierte IMEI- / IMSI-Paar zu finden, welches die IMEI des Endgeräts 102 aufweist, um dort die Markierung "aktiv" zurückzusetzen.

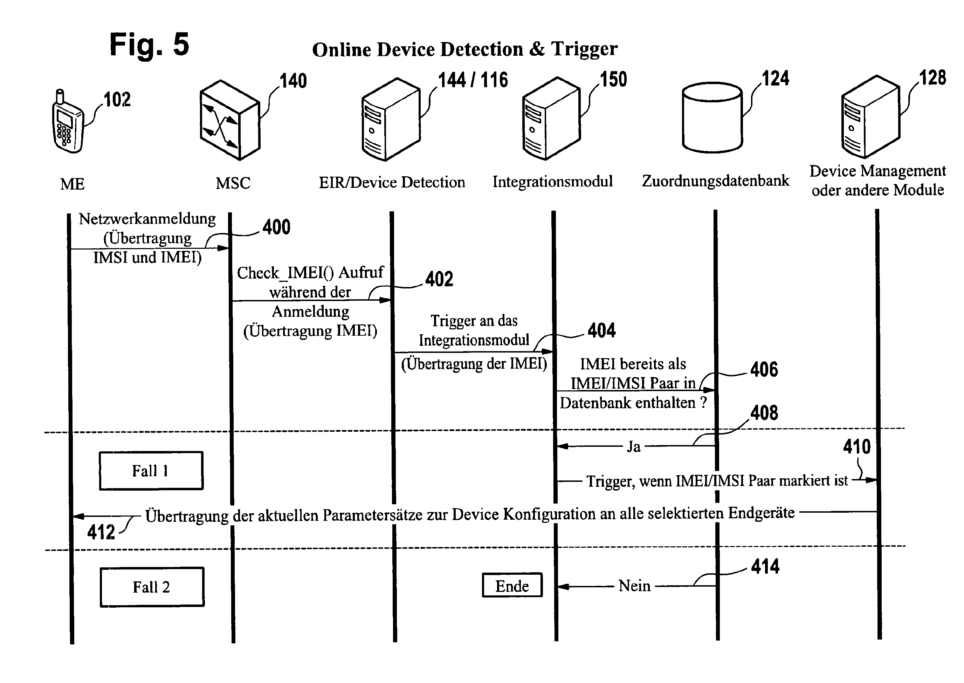

Die Figur 5 zeigt ein Sequenzdiagramm für das Online-Gerätemanagement, nachdem die Datenbank 124 erzeugt oder zur Verfügung gestellt worden ist.

In dem Schritt 400 erfolgt die Netzwerkanmeldung des Endgeräts 102 an dem MSC 140, wobei die IMSI des Nutzers 142 und die IMEI des Endgeräts 102 an das MSC 140 übertragen werden. Als Teil der Netzwerkanmeldung generiert das MSC 140 den Funktionsaufruf Check_IMEI mit der IMEI des Endgeräts 102 als Parameter. Dieser Funktionsaufruf wird in dem Schritt 402 von dem MSC 140 an das Geräteregister (EIR) 144 und / oder die Komponente 116 übertragen. Daraufhin wird die Nachricht 148 generiert (vgl. Figur 3) und in dem Schritt 404 an das Integrationsmodul 150 übertragen. Daraufhin richtet das Integrationsmodul 150 eine Abfrage an die Datenbank 124, um festzustellen, ob in der Datenbank 124 bereits ein Eintrag einer IMEI- / IMSI-Paarung für diese IMEI vorhanden ist (Schritt 406). Für diese Datenbankabfrage wird die in dem Schritt 404 erhaltene IMEI als Abfrageschlüssel verwendet.

Wenn dies der Fall ist (Fall 1), signalisiert dies die Datenbank 124 dem Integrationsmodul (Schritt 408), und das Integrationsmodul 150 sendet daraufhin ein Auslösesignal ("Trigger") an die Komponente 128, wenn das betreffende IMEI- / IMSI-Paar in der Datenbank 124 markiert ist (Schritt 410).

Die Markierung von IMEI- / IMSI-Paarungen der Datenbank 124 kann durch eine zuvor erfolgte Datenbankabfrage erzeugt worden sein. Beispielsweise werden mit einer solchen Datenbankabfrage alle IMEI- / IMSI-Paarungen ermittelt, die ein bestimmtes Abfragekriterium erfüllen, beispielsweise alle Geräte eines bestimmten Herstellers und / oder eines bestimmten Gerätetyps, die Nutzern zugeordnet sind, die einen bestimmten Telekommunikationsdienst oder Dienste abonniert haben. Diejenigen IMEI- / IMSI-Paarungen, die dieses Abfragekriterium erfüllen, werden dann markiert. Sobald ein Trigger erfolgt, wie dies in dem Schritt 410 der Fall ist, überträgt daraufhin die Komponente 128 die diesbezüglichen Geräteverwaltungsdaten 138 (vgl. Figur 1) an das Endgerät 102.

Bei diesen Geräteverwaltungsdaten kann es sich um aktuelle Parametersätze für die sogenannte Device Konfiguration der aufgrund der zuvorigen Datenbankabfrage selektierten und markierten Endgeräte handeln (Schritt 412).

Wenn die Datenbankabfrage des Schritts 406 ergibt, dass noch keine Eintragung in der Datenbank 124 für die in dem Schritt 404 erhaltene IMEI vorliegt, erfolgt in dem Schritt 414 keine weitere Aktion (Fall 2).

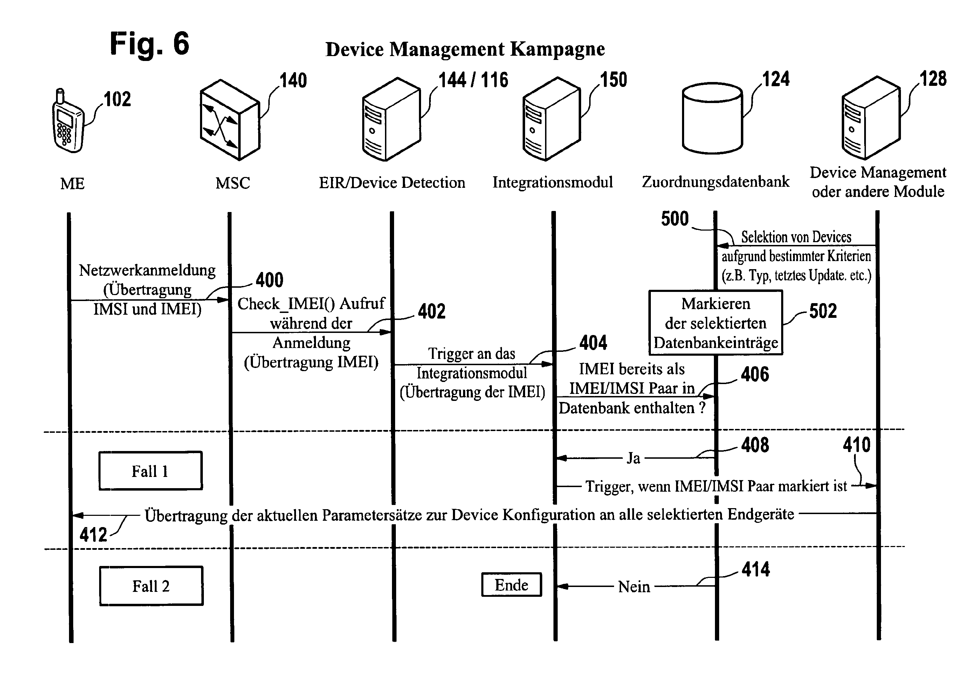

Die Selektierung und die Markierung von Einträgen der Datenbank 124 kann durch eine Applikation des Integrationsmoduls 150 oder auch durch die externe Komponente 128 oder eine andere externe Komponente erfolgen, wie in dem Sequenzdiagramm der Figur 6 dargestellt. Bei dieser Ausführungsform führt die Komponente 128 in dem Schritt 500 eine Abfrage der Datenbank 124 mit einem vorgegebenen Suchprofil aus, um zum Beispiel alle in der Datenbank 124 erfassten Endgeräte zu ermitteln, die bestimmte Kriterien erfüllen, zum Beispiel hinsichtlich des Gerätetyps, des letzten Updates der Konfigurationsdaten und / oder andere Kriterien. Die aufgrund dieser Abfrage in der Datenbank 124 ermittelten IMEI- / IMSI-Paarungen werden in dem Schritt 502 markiert. Aufgrund einer nachfolgenden Netzwerkanmeldung, laufen dann die Schritt 400 bis 414 ab, wie mit Bezugnahme auf die Figur 5 oben erläutert.

Beispielsweise kann so ein neuer Dienst des Mobilfunknetzes 100 eingeführt werden. Diejenigen Endgeräte, die den neuen Dienst verarbeiten können, werden in der Datenbank 124 markiert. Falls der neue Dienst gebührenpflichtig ist oder die zuvorige Zustimmung des betreffenden Nutzers erfordert, werden dementsprechend nur diejenigen Endgeräte markiert, die dieses zusätzliche Kriterium hinsichtlich des zugeordneten Nutzers erfüllen.

Bei dem jeweils nächsten Anmeldevorgang an dem Mobilfunknetz 100 werden diese Endgeräte mit den aktuellen Konfigurationsparametern für diesen Dienst versehen, so dass der Dienst sofort ohne weitere Eingriffe des Nutzers verwendet werden kann. Beispielsweise kann auf diese Art und Weise ein Dienst zur Synchronisierung der Daten eines Netzwerkdienstes mit den in einem Endgerät gespeicherten Daten erfolgen, wie zum Beispiel SyncML (vgl. SyncML Representation Protocol, Version 1.0.1, 15.06.2001).

Die Figur 7 zeigt eine Ausführungsform einer Struktur der Datenbank 124. Jeder Eintrag 158 der Datenbank 124 beinhaltet verschiedene Felder, insbesondere ein Feld zur Speicherung einer Gerätekennung für die Geräteidentifikation, beispielsweise die IMEI, ein Feld mit einer Nutzerkennung für die Nutzeridentifikation, beispielsweise die IMSI und / oder MSISDN, ein Feld zur Speicherung des Datums der letzten Aktualisierung der Geräteverwaltungsdaten des in dem ersten Feld identifizierten Endgeräts, ein Feld zur Angabe, ob die betreffende Gerätekennungs- / Nutzerkennungs-Paarung aktiv ist, wobei bei mehreren von denselben Nutzer benutzten Endgeräten das zuletzt genutzte auf "aktiv" gesetzt wird.

Die Eintragung 158 kann ferner ein Feld beinhalten, um ein Flag "neu" zu setzen, wenn das betreffende Endgerät zum ersten Mal erkannt wird, sowie ein Feld zur Setzung eines Markierungs-Flags für die besondere Behandlung des betreffenden Endgeräts im Rahmen von Kampagnen, wie mit Bezugnahme auf die Figuren 5 und 6 erläutert.

Ferner kann der Eintrag 158 ein Feld beinhalten, um die gegebenenfalls für die Geräteverwaltung auszuführende Aktion zu spezifizieren. Beispielsweise kann hier die Art des neu einzurichtenden Dienstes, wie zum Beispiel SynchML angegeben sein. Schließlich kann der Eintrag 158 noch verschiedene weitere Felder, wie zum Beispiel zur Angabe der Historie der letzteren verwendeten Endgeräte, sowie Felder zur Administration und Verwendung im Rahmen der Implementierung beinhalten.

Die betrachteten Ausführungsformen der vorliegenden Erfindung bieten eine kostengünstige und mit geringem Aufwand zu implementierenden Lösung zur automatischen Erkennung von Endgeräten und des zugehörigen Nutzers ("Subscriber"), wobei auf existente Netzwerkfunktionalitäten für die automatische Geräteerkennung in mobilen Netzen zurückgegriffen werden kann.

In einem Anwendungsfall möchte ein Netzwerkbetreiber des Mobilfunknetzes 100 einen neuen Dienst über GPRS anbieten. Dieser Dienst soll ausschließlich Nutzern angeboten werden, die ein GPRS fähiges Endgerät haben. Dieser Dienst erfordert die funktionsfähige Konfiguration des Endgeräts für den GPRS-Dienst. Alle möglichen Kunden sollen per SMS benachrichtigt werden, dass dieser neue Dienst für sie verfügbar ist. Dies ist beispielweise verbunden mit einer dreimaligen freien Nutzung des Dienstes.

Mit Hilfe der vorliegenden Erfindung kann die entsprechende Geräteverwaltung der Endgeräte folgendermaßen durchgeführt werden:
- In der Datenbank 124 werden alle Eintragungen 158 markiert, die ein GPRSfähiges Endgerät betreffen. Die Prüfung, ob ein Endgerät GPRS-fähig ist oder nicht, erfolgt dabei anhand der Gerätekennung, also der IMEI des betreffenden Endgeräts.
- Aufgrund der Markierung der betreffenden Eintragungen werden jeweils bei der nächsten Anmeldung der Endgeräte, die für die Konfiguration des GPRS-Dienstes erforderlichen Konfigurationsdaten übertragen, so dass die betreffenden Endgeräte dann für die Nutzung des Dienstes vorbereitet sind (vgl. Schritt 410 und 412 der Figuren 5 und 6).
- Aufgrund des Auslösesignals ("Trigger") des Schritts 410 kann die Versendung einer Werbe-SMS an das betreffende Endgerät ausgelöst werden, um den betreffenden Nutzer über die Zurverfügungstellung des neuen Dienstes zu informieren und dafür zu werben.

Von besonderem Vorteil ist dabei, dass der neue Dienst sofort und ohne manuelle Konfiguration des Endgeräts durch den Kunden unmittelbar genutzt werden kann.

Ein weiterer Anwendungsfall ist das Sammeln von Marketing-Informationen. Beispielsweise möchte das Marketing eines Netzwerkbetreibers herausfinden, ob ein neu in den Markt eingeführtes Endgerät mit speziellen Merkmalen für zukünftige Dienste, zum Beispiel UMTS, von dem Kunden angenommen und genutzt wird.

Hierzu kann die Datenbank 124 wie folgt genutzt werden:
- Durch Zugriff auf die Datenbank 124 kann das Marketing einen kompletten Überblick über die aktive Nutzung aller Endgeräte der Kunden eines Netzwerkbetreibers erhalten.
- Durch einen mehrfachen Zugriff auf die Datenbank 124 kann zum Beispiel die Akzeptanz bei der Einführung eines neuen Endgeräts über einen bestimmten Zeitraum überwacht werden.
- Ab einer bestimmten Marktpenetration, von zum Beispiel mindestens 3 %, kann ein neuer Dienst speziell für das betreffende Endgerät erfindungsgemäß eingeführt werden.

Die in den oben genannten Ausführungsbeispielen beschriebenen Komponenten können Hardware und / oder Software implementiert sein und zwar in einer einzigen Hardware-Komponente oder als über verschiedene Hardware-Komponenten verteilte oder vernetzte Lösung.

### Bezugszeichenliste

- 100: Mobilfunknetz
- 102: Endgerät
- 104: Mobilfunkschnittselle
- 106: Speicher
- 108: Chipkarten-Leser
- 110: Chipkarte
- 112: Speicher
- 114: Computersystem
- 116: Komponente
- 118: Komponente
- 120: Komponente
- 122: Signal
- 124: Datenbank
- 126: Netzwerk
- 128: Komponente
- 128': Komponente
- 128": Komponente
- 130: Daten
- 132: Datenbankabfrage
- 134: Antwort
- 136: Anforderung
- 138: Geräteverwaltungsdaten
- 140: MSC
- 142: Nutzer
- 144: Geräteregister
- 148: Nachricht
- 150: Komponente
- 152: Analysekomponente
- 154: Datenquelle
- 156: Datenquelle
- 158: Eintrag

## Patentansprüche

1. Computersystem zur Initiierung einer Übertragung von Daten (138) an Geräte (102) eines Mobilfunknetzes (100), wobei jedem Gerät eine eindeutige Gerätekennung und jedem Nutzer des Mobilfunknetzes eine eindeutige Nutzerkennung zugeordnet ist, wobei die Zuordnung von einem der Nutzer zu einem der Geräte veränderbar ist, mit
- Mitteln (116) zum Empfang der Gerätekennung eines der Geräte von dem Mobilfunknetz aufgrund einer Netzwerkanmeldung des einen der Geräte,
- Mitteln (118) zur Abfrage einer Datenbank (124), die aktuelle Zuordnungen der Gerätekennungen zu den Nutzerkennungen speichert, wobei die Abfrage mit der Gerätekennung des einen der Geräte erfolgt, um die der Gerätekennung aktuell zugeordnete Nutzerkennung zu ermitteln,
- Mitteln (120) zur Initiierung der Übertragung der Daten zu dem einen der Geräte anhand der Nutzerkennung.

2. Computersystem nach Anspruch 1, wobei es sich bei den Daten um Geräteverwaltungsdaten handelt.

3. Computersystem nach Anspruch 1 oder 2, wobei es sich bei den Daten um digitalen Content handelt.

4. Computersystem nach Anspruch 1, 2 oder 3, wobei die Daten zur Erbringung eines digitalen Dienstes übertragen werden.

5. Computersystem nach einem der vorhergehenden Ansprüche, wobei die Mittel zur Initiierung der Übertragung zur Auslösung eines push service ausgebildet sind.

6. Computersystem nach einem der vorhergehenden Ansprüche, wobei die Mittel zur Initiierung der Übertragung mit einer oder mehreren externen Netzwerkkomponenten koppelbar sind, um im wesentlichen synchron die Übertragung der Daten auszulösen.

7. Computersystem nach einem der vorhergehenden Ansprüche, wobei die Mittel zur Initiierung der Übertragung der Daten zur Generierung eines Auslösesignals ausgebildet sind.

8. Computersystem nach einem der vorhergehenden Ansprüche, wobei die Mitteln zur Initiierung der Übertragung der Daten mit einer oder mehrer der folgenden Komponenten verbindbar sind: Einer Plattform zur Verwaltung der Geräte, einer Content Management Plattform und/oder einer Customer Relationship Management Plattform.

9. Computersystem nach einem der vorhergehenden Ansprüche, wobei die Mittel (120) zur Initiierung der Übertragung der Daten mit zumindest einer Netzwerkkomponente verbindbar sind, und wobei die Netzwerkkomponente zur Auswahl und/oder Anpassung der Daten in Abhängigkeit von einer anhand der Gerätekennung ermittelten Eigenschaft des einen der Geräte ausgebildet ist.

10. Computersystem nach einem der vorhergehenden Ansprüche, wobei die Mittel zum Empfang der Gerätekennung zum Empfang eines Funktionsaufrufs, der von einer Netzkomponente (140) des Mobilfunknetzes an ein Geräteregister (144) gerichtet wird, ausgebildet sind.

11. Computersystem nach Anspruch 2, wobei die Geräteverwaltungsdaten Konfigurationsdaten und / oder ein von dem Gerät ausführbares Programm beinhalten.

12. Computersystem nach einem der vorhergehenden Ansprüche, wobei die Datenbank für die Gerätekennungen ein Markierungsfeld aufweist, und wobei die Mittel zur Initiierung der Übertragung von Geräteverwaltungsdaten so ausgebildet sind, dass die Übertragung der Geräteverwaltungsdaten an das eine der Geräte initiiert wird, wenn das der Gerätekennung des einen der Geräte zugeordnete Markierungsfeld markiert ist.

13. Computersystem nach einem der vorhergehenden Ansprüche, mit Mitteln zur Abfrage der Datenbank mit einem Suchprofil, wobei die Markierungsfelder von Gerätekennungen, die aufgrund der Abfrage aufgefunden wurden, markiert werden.

14. Computersystem nach einem der vorhergehenden Ansprüche, mit Mitteln zur Abfrage einer Nutzerprofildatenbank mit der Nutzerkennung als Schlüssel, um in Abhängigkeit des Nutzerprofils die Übertragung der Geräteverwaltungsdaten zu initiieren.

15. Verfahren zur Initiierung einer Übertragung von Daten (138) an Geräte (102) eines Mobilfunknetzes (100), wobei jedem Gerät eine eindeutige Gerätekennung und jedem Nutzer des Mobilfunknetzes eine eindeutige Nutzerkennung zugeordnet ist, wobei die Zuordnung von einem Nutzer zu einem Gerät veränderbar ist, mit folgenden Schritten:
- Empfang der Gerätekennung eines der Geräte von dem Mobilfunknetz aufgrund einer Netzwerkanmeldung des einen der Geräte,
- Abfrage einer Datenbank (124), die aktuelle Zuordnungen von Gerätekennungen zu Nutzerkennungen speichert, wobei die Abfrage mit der Gerätekennung des einen der Geräte erfolgt, um die der Gerätekennung aktuell zugeordnete Nutzerkennung zu ermitteln,
- Initiierung der Übertragung der Daten (138) zu dem einen der Geräte anhand der Nutzerkennung.

16. Verfahren nach Anspruch 15, wobei die Gerätekennung mit einem Funktionsaufruf empfangen wird, der aufgrund der Netzwerkanmeldung von einer der Netzkomponenten (140) des Mobilfunknetzes an ein Geräteregister (144) gerichtet wird.

17. Verfahren nach Anspruch 15 oder 16, wobei die Geräteverwaltungsdaten Konfigurationsdaten für ein Übertragungsprotokoll beinhalten.

18. Computerprogrammprodukt mit ausführbaren Instruktionen zur Durchführung eines Verfahrens nach einem der Ansprüche 15 bis 17.
